Europäisches Patentamt

European Patent Office

Office européen des brevets

(19)

(11) **EP 0 756 076 A1**

(12) **EUROPÄISCHE PATENTANMELDUNG**

(43) Veröffentlichungstag:
29.01.1997 Patentblatt 1997/05

(51) Int. Cl.$^6$: **F02B 75/02**, F02B 41/04,
F02B 75/04, F02D 15/02

(21) Anmeldenummer: 95111210.1

(22) Anmeldetag: 17.07.1995

(84) Benannte Vertragsstaaten:
AT CH DE DK ES FR GB IT LI NL SE

(71) Anmelder: **von Görtz & Finger Techn.
Entwicklungs Ges.m.b.H.
D-36110 Schlitz (DE)**

(72) Erfinder: **von Görtz, Rüdiger,Graf
D-36110 Schlitz (DE)**

(54) **Verfahren zur Nutzung der Abwärme eines Verbrennungsmotors**

(57) **Verfahren zur Nutzung der Abwärme eines Verbrennungsmotors,**
wobei zumindest ein Teil der in den Abgasen eines ersten Arbeitstaktes sowie im Motorblock enthaltenen Wärmeenergie zum Verdampfen einer vor Beginn eines zweiten Arbeitstakts in den Verbrennungsraum und in die Abgase des vorhergehenden Arbeitstaktes einge- spritzten Flüssigkeit und damit zu einer Erhöhung des Gesamtdrucks des Gemisches aus Abgasen und Flüssigkeitsdampf genutzt und während des folgenden, zweiten Arbeitstaktes in mechanische Arbeit überge- führt wird.

Das erfindungsgemäße Verfahren, dargestellt als **2+2-Takt-Motor** in Fig.1, vergrößert den Brennraum im **3** Takt, um dadurch die sehr hohen Temperaturen und Drücke, die beim Nachverdichten im Takt **3** entstehen, zu vermeiden und auch noch die Restenergie in mecha- nische Arbeit umzusetzen.

Um bei jedem 2.Takt einen Arbeitstakt zu erhalten, werden am Ende des 4.Taktes die Auslaßventile geöff- net und durch die unteren Öffnungen, mit Überdruck, eine Querspülung erreicht.

## 2 + 2 TAKT-MOTOR

**FIG.1**

## Beschreibung

Die Erfindung richtet sich auf ein Verfahren zur Abwärmenutzung eines Verbrennungsmotors in zusätzliche mechanische Leistung.

Bei Verbrennungsmotoren werden nur ca. 35% der bei der Verbrennung frei werdenden Energie in mechanische Leistung überführt. Der Rest geht als Abwärme über die Oberfläche des Motorblocks,den Kühlkreislauf und die Abgase verloren. Lediglich ein kleiner Teil kann über den Kühlwasserkreislauf und die fahrzeugeigene Heizung genutzt werden. Aufgrund der relativ hohen Kraftstoffkosten und der CO - Belastung durch die Abgase, wäre eine Erhöhung des Wirkungsgrades durch höhere Nutzung der Abwärme wünschenswert. Es ist jedoch bislang nicht gelungen, in dieser Richtung einen nennenswerten Fortschritt zu erzielen.

Es ist die Aufgabe der vorliegenden Erfindung, ein Verfahren zu schaffen, bei dem zumindest ein Teil der über die Abgase und den Motorblock verlorengehenden Energie in zusätzliche mechanische Arbeit umgewandelt wird. Zu diesem Zweck ist der erfindungsgemäße Gedanke eines Verfahrens zur Nutzung der Abwärme eines Verbrennungsmotors, daß zumindest ein Teil der in den Abgasen eines ersten Arbeitstaktes sowie im Motorblock enthaltenen Energie genutzt wird.

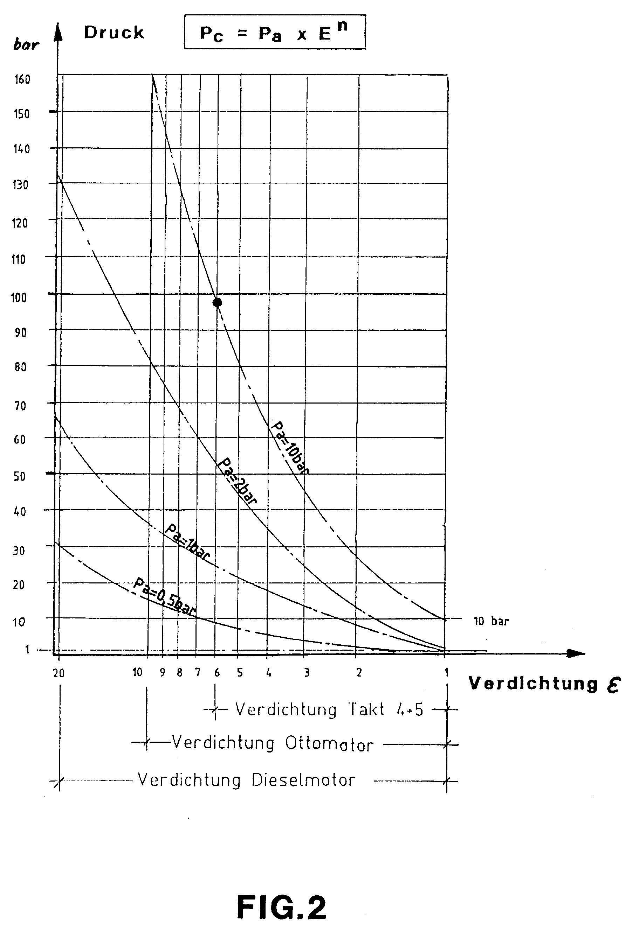

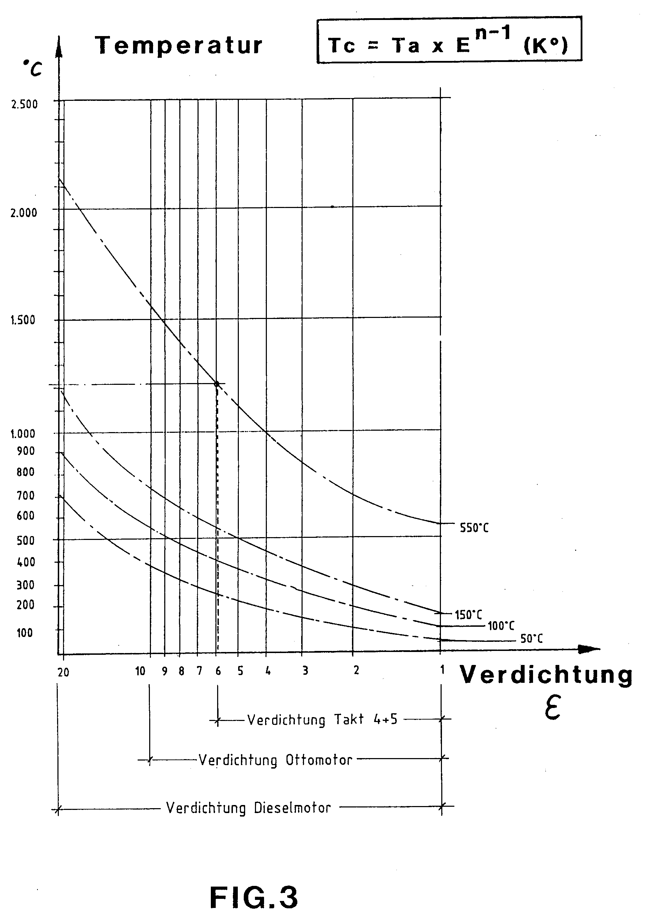

Die Verdampfung einer vor Beginn eines zweiten Arbeitstaktes in den Verbrennungsraum und in das Abgas des vorhergehen Arbeitstaktes eingespritzten Flüssigkeit, führt zu einer Erhöhung des Gesamtdrucks des Gemisches aus Abgasen und Flüssigkeitsdampf, der während des folgenenden zweiten Arbeitstaktes in mechanische Arbeit überführt wird. Aus den Diagrammen **Fig.2+3** ist zu erkennen, daß der Druck und die Temperatur beim Nachverdichten im Takt **3** sehr hoch ansteigt und jeden Motor zerstören würde. Es ist daher Aufgabe des erfindungsgemäßen Verfahrens, daß der Verbrennungsraum im Takt **3** vergrößert wird.

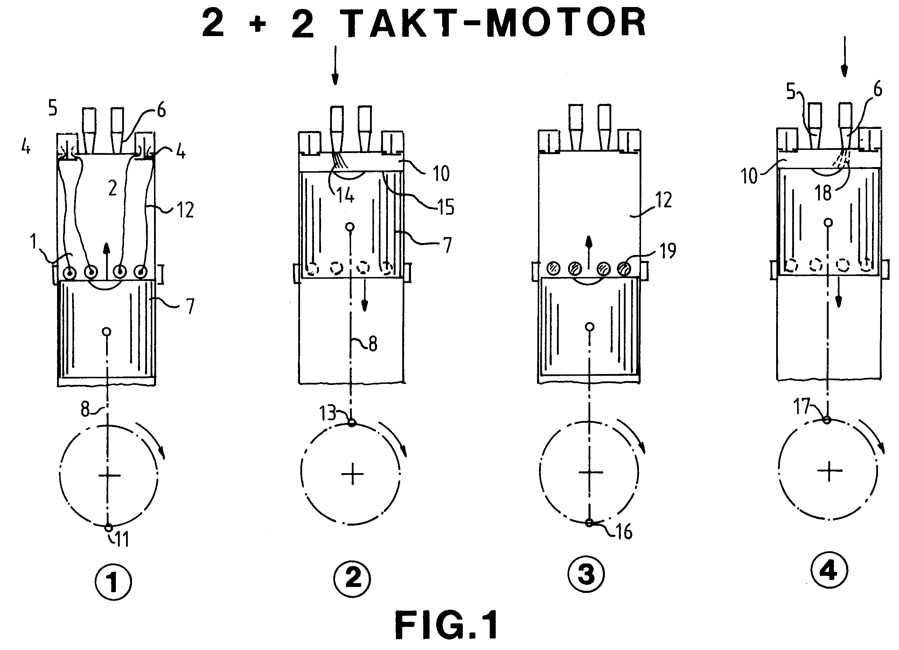

Der Arbeitszyklus besteht bei Anwendung des erfindungsgemäßen Verfahrens aus **vier Takten**. Wie aus Fig.1 zu ersehen ist, besteht der Arbeitszyklus aus den vier Takten: Verdichten **1**; Arbeitstakt **2**; Nachverdichten **3**; und dem zweiten Arbeitstakt **4**.

Direkt nach dem Arbeitstakt **2** ist das Abgas auf ein maximales Volumen expandiert. Die Restenergie aus der Verbrennung ist nach Beendigung des ersten Arbeitstaktes **2** in Form von Druck und Temperatur vorhanden. Damit diese Energie nicht unwiederbringlich verloren geht, werden die Abgase im folgenden Takt nicht ausgestoßen, sondern nochmals in einem Nachverdichtungstakt **3** komprimiert. Nachdem sich der Kolben bis zum oberen Totpunkt des Taktes **3** bewegt hat und der zweite Arbeitstakt **4** beginnt, wird in den Verbrennungsraum und in die Abgase des vorhergehenden Arbeitstaktes **2** eine Flüssigkeit eingespritzt. An den heißen Oberflächen des Verbrennungsraums und durch die Aufnahme der Wärmeenergie der Abgase verdampft die Flüssigkeit schlagartig. Der Phasenübergang führt zu einer Erhöhung des Gesamtdrucks des Gemisches aus Abgasen und Flüssigkeitsdampf.

Da sich der Kolben nun in Expansionsrichtung bewegt, kann dieser erhöhte Druck sofort zusätzliche mechanische Arbeit an der Kurbelwelle leisten. Die dabei aufgebrachte Energie wird sowohl den Abgasen als auch den Oberflächen des heissen Verbrennungsraumes entzogen. Der Motor wird optimal gekühlt, da die Wärme direkt am Entstehungsort abgeführt wird.

Ein erstes erfindungsgemäßes Verfahren weist das weitere Merkmal auf, daß die Abgase nach dem ersten Arbeitstakt **2** vor dem Ausstoßen ein zweites Mal komprimiert werden und etwa im Zeitpunkt höchster Kompression die zu verdampfende Flüssigkeit eingespritzt wird. Die Abgase des ersten Arbeitstaktes **2** bleiben während des folgenden Taktes **3** vollständig im Zylinderraum. Dort werden sie von dem Kolben abermals verdichtet. Dabei steigen der Druck und die Temperatur der Abgase auf sehr hohe Werte. Somit ergibt sich ein sehr starkes Temperaturgefälle zu der eingespitzten Flüssigkeit, so daß diese sehr schnell auf ihre Siedetemperatur erhitzt wird und schlagartig verdampft. Diese schnelle Verdampfung ist besonders wünschenswert, damit zu dem Zeitpunkt, zu dem die gesamte Flüssigkeit verdampft ist und der Gesamtdruck im Verbrennungsraum daher angestiegen ist, der Kolben sich möglichst wenig von der Stellung der höchsten Kompression entfernt hat. Da die auf die Kurbelwelle übertragene Energie proportional zu dem Produkt aus der Druckkraft und dem Hub des Kolbens unter dem Einfluß dieser Druckkraft ist, kann dann der erhöhte Druck am besten im zweiten Arbeitstakt **4** ausgenutzt werden.

Es liegt im Rahmen der Erfindung, daß das Gemisch aus Abgasen und Flüssigkeitsdampf kurz vor Beendigung des zwei-Arbeitstaktes **4** mit Überdruck aus dem Druckbehälter, durch die unteren Öffnungen aus den geöffneten Auslaßventilen ausgestoßen werden. Die ausgestoßenen vermischten Abgase weisen jedoch eine niedrigere Temperatur auf. Auch kann durch eine geeignete Vorrichtung, welche die ausgestoßenen Gase durchlaufen, ein Teil der eingespritzten Flüssigkeit durch Kondensation zurückgewonnen werden. Dadurch wird ein zu hoher Flüssigkeitsverbrauch vermieden. Ebenfalls kann die Kondensationswärme für die Vorwärmung der einzuspritzenden Flüssigkeit verwendet werden. Es besteht auch die Möglichkeit, der Flüssigkeit ein geeignetes Additiv beizumischen, um bessere Abgaswerte zu erhalten.

Die Flüssigkeit sollte mit hohen Druck über eine seperate Einspritzpumpe und eine möglichst kurze Verbindungsleitung zu einer Mehrlochdüse geführt werden. Damit wird erreicht, daß die Flüssigkeit in feinzerstäubten Aerosolen direkt in den Brennraum eingespritzt werden kann. In dem Kolben befindet sich eine muldenförmige Vertiefung, die mit einem feinen Kupferdrahtgestrick gefüllt sein könnte. Da Kupfer eine sehr hohe Wärmeleitfähigkeit besitzt, wird damit ein schnellerer Wärmeübergang von der gespeicherten Wärme aus dem ersten Arbeitstakt **2** erreicht und es erfolgt eine Verdampfung in wenigen Millisekunden. Ebenfalls wird bei der Direkteinspritzung durch die Verdampfung der Flüssigkeit die Restwärme aus dem ersten Arbeitstakt **2** , die im Zylinderkopf, Kolben und Motorblock vorhanden ist, sofort übernommen.

Es ist vorteilhaft, daß eine Flüssigkeit mit hoher Wärmeleitfähigkeit eingespritzt wird. Durch diese Maßnahme wird erreicht, daß sowohl die Flüssigkeit als auch deren Dampf in einem kurzen Zeitraum viel Wärme aufnehmen können. Die eingespritzte Flüssigkeit erhitzt sich in einem kurzen Zeitraum auf ihre Siedetemperatur. Auch kann der Flüssigkeitsdampf während seines Verbleibens im Zylinderraum ständig einen hohen Betrag der im Motorblock gespeicherten Wärmemenge aufnehmen.

Es hat sich als günstig erwiesen, daß eine Flüssigkeit mit niedriger Siedetemperatur eingespritzt wird. Bei Verwendung einer derartigen Flüssigkeit ist der Zeitraum, in dem sich die eingespritzte Flüssigkeit auf ihre Siedetemperatur erhitzt, so gering als möglich. Der Verdampfungsvorgang kann somit sofort nach dem Einspritzen einsetzen. Nötigenfalls kann die Flüssigkeit vor dem Einspritzen bis knapp unter den erhöhten Siedepunkt während des Einspritzens erhitzt werden.

Es liegt im Rahmen der Erfindung, daß bei einem Hubkolbenmotor zur Durchführung des erfindungsmäßigen Verfahrens am Zylinderkopf zusätzlich eine Einspritzdüse zum feinzerstäubenden Einspritzen der Flüssigkeit angeordnet ist. Hierfür können handelsübliche Einspritzdüsen für Kraftstoff verwendet werden. Jedoch ist bei der Wahl der Düsen besonders darauf zu achten, daß die Flüssigkeit während des Einspritzens so fein als möglich zerstäubt wird. Je feiner die Flüssigkeit zerstäubt wird, um so größer ist die Oberfläche eines Flüssigkeitströpfchens im Verhältnis zu seinem Volumen. Diese Tatsache ist für einen schnellen Verdampfungsvorgang wichtig. Außerdem ist es günstig, wenn ein möglichst großer Teil der fein zerstäubten Flüssigkeit direkt auf die heißen Oberflächen des Brennraumes gelangt und seine Verdampfungswärme diesen Oberflächen entzieht, da diese eine bedeutend höhere Wärmeleitfähigkeit als die Abgase aufweisen.

Weitere Merkmale, Einzelheiten und Vorteile der Erfindung ergeben sich aus der folgenden Beschreibung eines Verfahrens und bevorzugter Ausführungsformen der Erfindung sowie anhand der Zeichnungen. Hierbei zeigt:

**Fig.1** den Funktionsablauf des **2+2 Takt-Motors**.

In der **Fig.1** sind die vier Takte des erfindungsgemäßen Verfahrens nach den Ansprüchen 1 bis 3 skizziert. In stark vereinfachter Form ist der Zylinder 1 eines Hubkolbenmotors dargestellt. Dieser weist im Zylinderkopf 2 , zwei Auslaßventile 4, sowie eine Mehrloch - Einspritzdüse 5 für Kraftstoff und eine Einspritzdüse 6 für die Flüssigkeit auf. Weiterhin sid der Kolben 7, die Pleuelstange 8 und deren exentrische Lagerung 9 an der Kurbelwelle dargestellt. Der Kolben 7 ist in der Stellung zu Beginn des jeweiligen Takts gezeichnet.

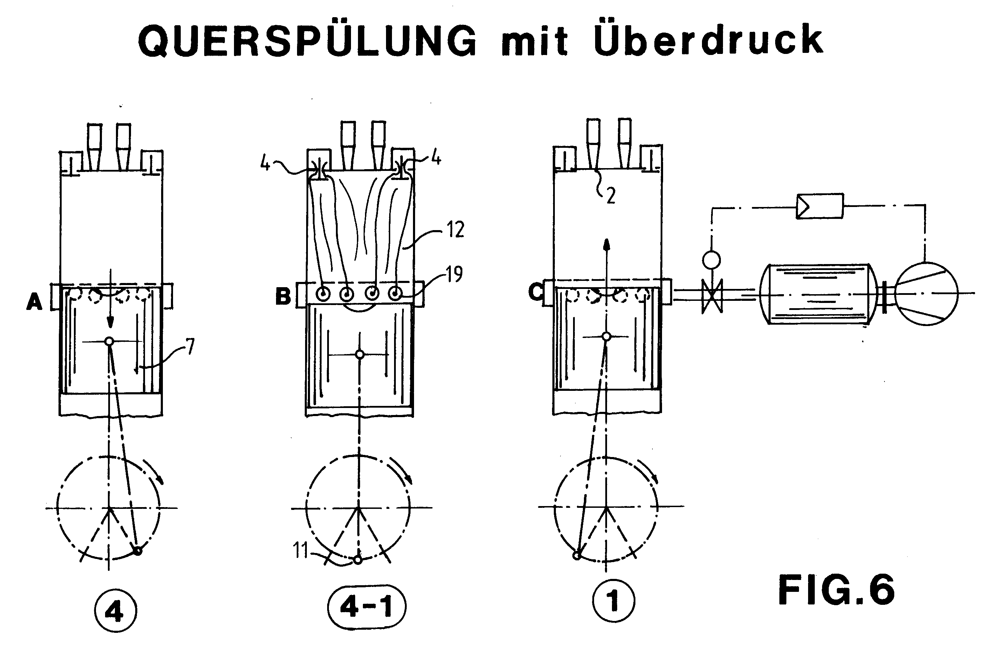

**Fig.6** Am unteren Totpunkt 11 des Kolbens 7 werden die zwei Auslaßventil 4 geöffnet. Durch die unteren Öffnungen wird aus dem Druckbehälter Überdruck in den Zylinderraum gedrückt und als Querströmung das Gemisch aus Abgas und Wasserdampf durch die beiden Auslaßventile 4 ausgestoßen. Bei der Bewegung des Kolbens 7 in Richtung Zylinderkopf 2 wird das eingeschlossene Luftvolumen 12 verkleinert und die Frischluft komprimiert.

Wenn sich der Kolben 7 im Bereich des oberen Totpunktes 13 befindet und die Kompression maximal ist, wird in die, aufgrund der Druckerhöhung erhitzte Frischluft, die vorbestimmte Menge an Kraftstoff 14 eingespritzt.

Aufgrund der hohen Temperaturen im Verbrennungsraum 10 entzündet sich der eingespritzte Kraftstoff 14 und verbrennt. Die freiwerdende Energie erhöht den Druck im Verbrennungsraum und erzeugt eine erhöhte Druckkraft auf die Oberfläche 15 des Kolbens 7. Diese Kraft wirkt über die Pleuelstange 8 beschleunigend auf die Kurbelwelle. Solange sich der Kolben 7 während des ersten Arbeitstaktes oberhalb des unteren Totpunktes 16 befindet, leistet die Verbrennungsenergie mechanische Arbeit. Jedoch bleibt ein ganz erheblicher Teil der Verbrennungsenergie in Form von Wärme weiterhin in den verbrannten Gasen und an den Wandungen gespeichert.

Um diese Restenergie, zumindest zum Teil, in zusätzliche mechanische Arbeit umzuwandeln, werden die verbrannten Gase nach dem ersten Arbeitstakt **2** nicht ausgestoßen.

Sie verbleiben im Zylinderraum 12, da der Druck aus dem Druckbehälter immer dem Restdruck im Zylinder 12 am U.T. angepaßt wird. Die Abgase werden vom Kolben 7 abermals verdichtet, wobei der Kurbelwelle hierzu Arbeit entzogen wird. Dieser Verdichtungstakt **3** ist im wesentlichen identisch mit dem Verdichtungstakt **1** ,mit dem Unterschied, daß die Gase zu Beginn des Verdichtungstaktes **3** bereits einen höheren Druck und eine hohe Temperatur aufweisen. Hat der Kolben 7 den oberen Totpunkt 17 erreicht, wird aus einer eigens dafür vorgesehenen Einspritzdüse 6 Flüssigkeit 18 in den Verbrennungsraum 10 eingespritzt.

Die Flüssigkeit wird durch die heißen, verdichteten Gase und vor allem durch die heißen Oberflächen 15 und 2 des Verbrennungsraumes 10, sowie durch das Kupferdrahtgestrick innerhalb des Kolbens 7 erhitzt und schlagartig verdampft. Dies führt zu einem Druckanstieg im Verbrennungsraum 10, so daß eine höhere Kraft auf die Oberfläche 15 des Kolbens 7 resultiert. Diese erhöhte Druckkraft wird durch die Pleuelstange 8 in ein die Kurbelwelle beschleunigendes Moment umgesetzt. Die während des Arbeitstaktes **4** auf die Welle übertragene mechanische Arbeit übersteigt wegen der erhöhten Druckkraft auf die Oberfläche 15 des Kolbens 7 bei dessen Expansionsbewegung die während des Verdichtungstaktes **3** der Kurbelwelle entzogene mechanische Arbeit. Die Bilanz der während der Takte **2** und **4** der Kurbelwelle zugeführten Arbeit ist also positiv.

Am Ende des Takt 4 , kurz vor dem Erreichen des Kolbens am unteren Totpunkt, öffnen die beiden Auslaßventile und es beginnt die Querspülung.

Wie aus dem Diagrammen **Fig.2+3** zu erkennen ist, steigt der Druck und die Temperatur beim Nachverdichtungstakt *3* sehr hoch an. Die Werte ergeben sich aus der Formel $P2 = P1 x E^n$ (bar) für den Druck und $T2 = T1 x E^{n-1}$ (K°) für die Temperatur. Da diese hohen Werte beim Nachverdichtungstakt *3* jeden Motor zerstören würden, muß der Druck und die Temperatur im Takt *3* reduziert werden. In beiden Formeln ist der Wert **E** für das Verdichtungsverhältnis vorhanden. Das bedeutet, bei einer Verringerung der Verdichtung wird sich auch die Temperatur und der Druck verringern.
Die Formel für die Verdichtung lautet $E = Vc + Vh / Vc$ . Da **Vh** konstant ist, kann nur **Vc** verkleinert werden. Das Volumen des Brennraum 10 errechnet sich aus der Kolbenfläche x **Hc**. **Hc** ist die Höhe des Brennraumes, der in der Fig.1 als Nr.10 bezeichnet wurde.

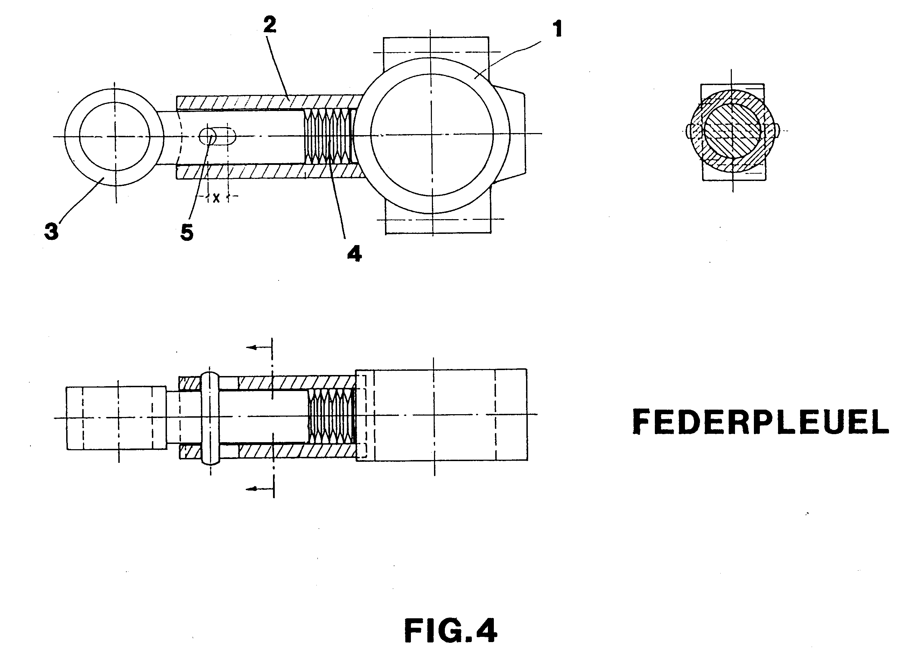

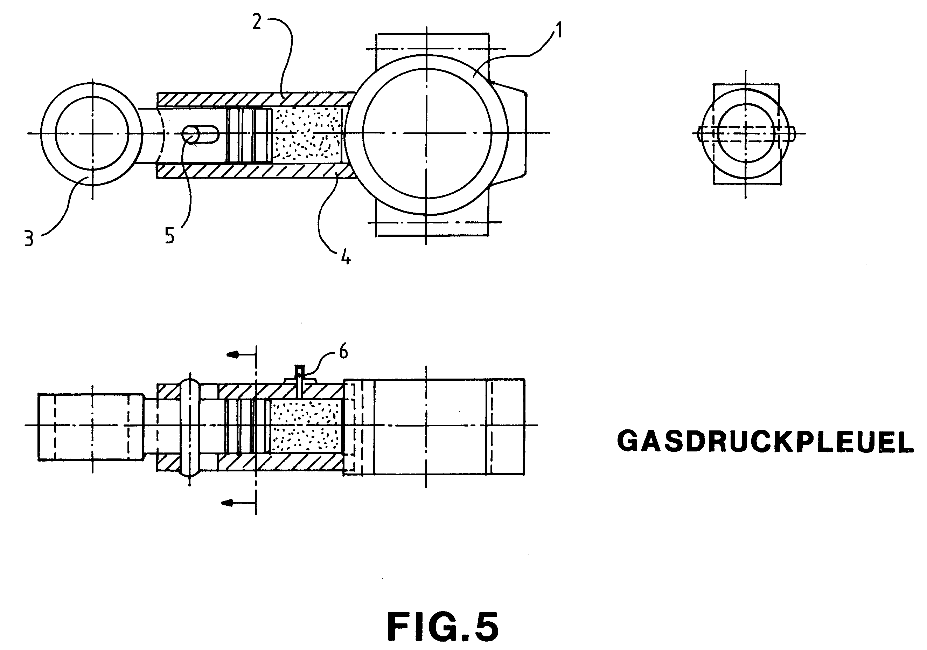

Um die Höhe **Hc** im Takt *3* zu verändern ergeben sich mehrere Möglichkeiten, die in den **Fig.4 und 5** dargestellt sind und im Rahmen der vorliegenden Erfindung liegen. In **Fig.4** ist ein *Federpleuel* dargestellt, das die Aufgabe hat, bei zu hohen Drücken einzufedern und damit die Verdichtung zu verkleinern. Damit wird auch der Druck und die Temperaim Takt *3* verringert. Die in den Tellerfedern 4 gespeicherte Energie wird in der zweiten Hälfte des Arbeitstakt *4* wieder in mechanische Energie umgewandelt und drückt mit dem unteren Pleuel 1 auf die Kurbelwelle. Ein Spannstift 5 gibt den Tellerfedern 4 eine berechnete Vorspannung und verhindert das Verdrehen des Kolbens. Mit diesem *Federpleuel* ist es möglich, serienmäßige Dieselmotore mit Direkteinspritzung und obenliegender Nockenwelle durch einfache Veränderungen in **2+2-Takt-Motore** umzubauen.

**Fig.5** zeigt eine weitere Möglichkeit das Pleuel 8 in dem Takt *3* zu verkürzen. Wie aus der **Fig.5** zu ersehen ist, wird der Druck am Ende des Takt *3* von einem *Gasdruckdämpfer*, der statt der Tellerfedern in das Pleuel eingebaut wird, aufgenommen. Sobald der Kolben im Takt *4* den Brennraum 10 vergrößert, fällt der Druck im Zylinder 12 stark ab und die im Gasdruckdämpfer gespeicherte Energie kann als zusätzlich Kraft auf die Kurbelwelle wirken. Am seitlich eingebauten Ventil 5, kann der Druck im *Gasdruckpleuel* in Intervallen überprüft und bei Bedarf korrigiert werden.

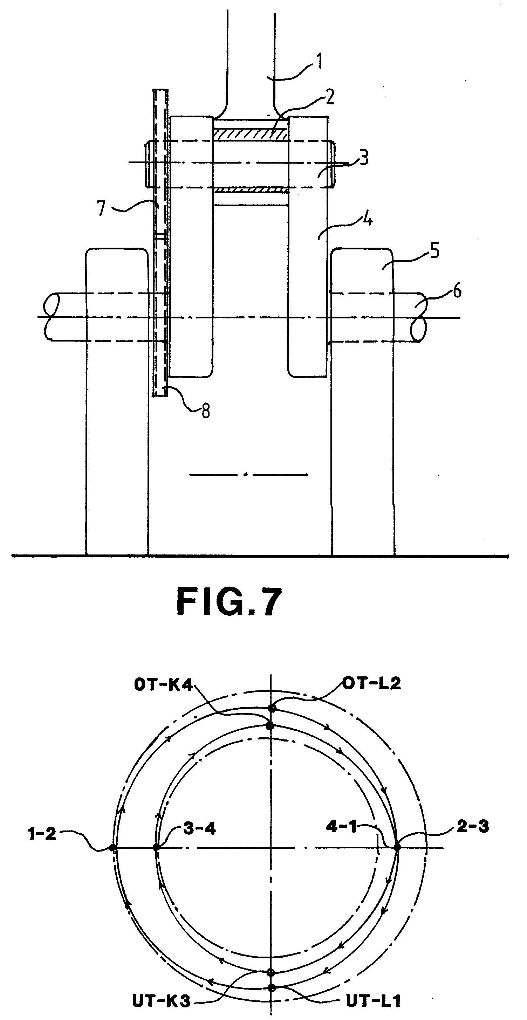

Statt des Federpleuel gibt es noch eine weitere Möglichkeit den Brennraum am Ende des Takt 3 zu vergrößern.**FIG.7** Am Pleuelzapfen 3 an der Kurbelwelle 6 ist ein drehender *Exenterring* eingebaut. Dieser Exenterring wird durch eine geeignete Übertragung, wie Rollenkette, Zahnräder 7 oder Zahnriemen 8 mit einer Übersetzung von 2:1, angetrieben **FIG.7** zeigt, daß sich der Exenterring bei 4 Takten einmal um 360° dreht. Dadurch entstehen zwei kurze und zwei lange Hübe, da der angetriebene Exenter von der größten Länge **1-2** bis zur kleinsten Länge **3-4** zweimal den Schnittpunkt **2-3/4-1** durchläuft.

Takt 1 - Verdichtung = Langer Hub.(Hohe Verdichtung)
Takt 2 - Arbeitshub 1 = Kurzer Hub.(Löcher verschlossen)
Takt 3 - Nachverdicht. = Kurzer Hub.(Größerer Brennraum)
Takt 4 - Arbeitshub 2 = Langer Hub.(Spülung der Abgase)

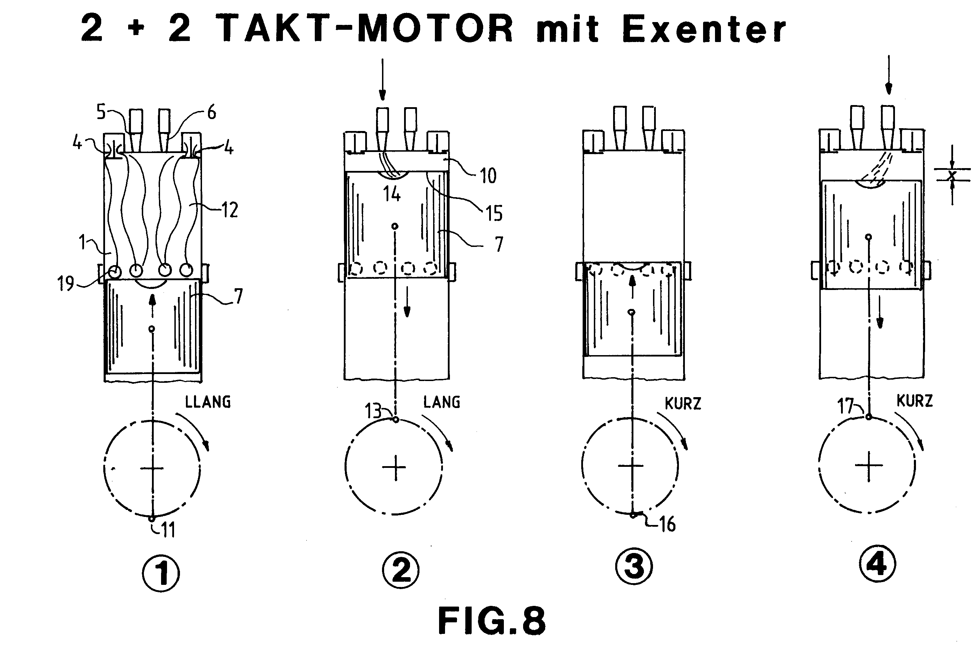

In **FIG.8** sind die vier Endpunkte der Kolbenoberfläche 15 dargestellt. Dabei ist gut zu erkennen, daß beim ersten kurzen Hub **2** der Kolben nicht bis zum Ausgangspunkt des ersten Taktes zurückläuft und dadurch die Löcher für die Spülluft geschlossen bleiben. Daraus ergibt sich der Vorteil, daß der Druck der Spülluft nicht immer dem Restdruck des Abgases aus dem ersten Arbeitstakt angepaßt werden muß.

Beim folgendem, ebenfalls kurzem Hub **3**, wird die Kolbenoberfläche, beim Nachverdichten, nicht bis zum O.T.-Punkt des ersten Taktes angehoben. Durch die Verkürzung des Hubes bleibt die Kolbenoberfläche um das Maß **"X"** unter dem O.T.-Punkt stehen und vergrößert dadurch den Brennraum. Da hierdurch auch das Verdichtungsverhältnis **E** reduziert wird, steigt der Druck und die Temperatur im Takt 3 nur bis zu den zulässigen Werten.

**Patentansprüche**

1. Verfahren zur Nutzung der Abwärme eines Verbrennungsmotors, dadurch gekennzeichnet, daß zumindest ein Teil der in den Abgasen eines ersten Arbeitstaktes *2* sowie im Motorblock enthaltenen Wärmeenergie durch Verdampfen einer vor Beginn eines zweiten Arbeitstakts *4* in den Verbrennungsraum und in die Abgase des vor hergehenden Arbeitstaktes eingespritzten Flüssigkeit. Damit wird die Erhöhung des Gesamtdrucks des Gemisches aus Abgasen und Flüssigkeitsdampf genutzt und während des folgenden, zweiten Arbeitstakts in mechanische Arbeit übergeführt.

2. Verfahren nach Anspruch 1 dadurch gekennzeichnet, daß die Abgase nach dem ersten Arbeitstakt vor dem Ausstoßen ein zweites Mal komprimiert werden und etwa im Zeitpunkt höchster Kompression die zu verdampfende Flüssigkeit eingespritzt wird.

3. Verfahren nach Anspruch 2, dadurch gekennzeichnet, daß das Gemisch aus Abgasen und Flüssigkeitsdampf am Ende des zweiten Arbeitstaktes durch Einblasen von Luft ausgestoßen wird.

4. Verfahren nach mindestens einem der Ansprüche 1 bis 3, dadurch gekennzeichnet, daß die Flüssigkeit mit hohem Druck feinst zerstäubt und in solcher Menge eingespritzt wird, daß sie durch die Wärmeenergie der Abgase und der Oberflächen des Verbrennungsraumes schlagartig verdampft wird.

5. Verfahren nach mindestes einem der Ansprüche 1 bis 4 dadurch gekennzeichnet, daß eine Flüssigkeit mit hoher Wärmeleitfähigkeit und niedriger Siedetemperatur eingespritzt wird.

6. Verfahren nach mindestens einem der Ansprüche 1 bis 5 dadurch gekennzeichnet, daß der eingespritzten Flüssigkeit ein Zusatz in Form von Additiven beigemischt wird, das die Abgaswerte verbessert.

7. Hubkolbenmotor zur Durchführung des Verfahrens nach mindestens einem der Ansprüche 1 bis 6, dadurch gekennzeichnet, daß am Zylinderkopf zusätzlich eine Düse zum fein zerstäubenden Einspritzen der Flüssigkeit angeordnet ist.

8. Verfahren nach mindestens einem der Ansprüche 1 bis 7 dadurch gekennzeichnet, daß die Flüssigkeit feinst zerstäubt in denZylinderraum eigespritzt wird. Um die Verdampfung zu beschleunigen ist es z.B. möglich, die Flüssigkeit auf ein Kupfergestrick, das sich in einer Mulde des Kolbens befindet, eingespritzt wird.

9. Verfahren nach mindestens einem der Ansprüche 1 bis 8 dadurch gekennzeichnet, daß durch das Einspritzen einer Flüssigkeit dem Brennraum und den Gasen Wärme entzogen wird und dadurch ein schneller und effek - tiver Kühlvorgang erfolgt.

10. Verfahren nach mindestens einem der Ansprüche 1 bis 9 dadurch gekennzeichnet, daß durch Kondensation der Abgase ein Teil der eingespritzten Flüssingkeit zurückgewonnen wird und die Restwärme für die Vorwärmung der Einspritz-Flüssigkeit verwendet wird.

11. Hubkolbenmotor zur Durchführung des Verfahrens nach mindestens einem der Ansprüche 1 bis 10, dadurch gekennzeichnet, daß das Pleuel als Federpleuel (Fig.4) hergestellt ist und durch Einfedern bei höherem Druck den Brennraum vergrößert.

12. Hubkolbenmotor zur Durchführung des Verfahrens nach mindestens einem der Ansprüche 1 bis 11, dadurch gekennzeichnet, daß das Pleuel als Gasdruckpleuel gebaut ist, um im Takt *3* den Brennraum zu vergrößern.

3. Hubkolbenmotor zur Durchführung des Verfahrens nach mindestens einem der Ansprüche 1 bis 12, dadurch gekennzeichnet, daß der Pleuelzapfen an der Kurbelwelle als Exenter arbeitet, um die Spüllöcher 19 am Ende von Takt *2* zu verschließen und den Brennraum 10 im Nachverdichtungstakt *3* zu vergrößern. (FIG.7+8)

# 2 + 2 TAKT-MOTOR

**FIG.1**

EP 0 756 076 A1

**FIG.2**

**FIG.3**

FEDERPLEUEL

FIG.4

**GASDRUCKPLEUEL**

# FIG.5

EP 0 756 076 A1

# QUERSPÜLUNG mit Überdruck

FIG.6

EP 0 756 076 A1

# FIG.7

2 + 2 TAKT-MOTOR mit Exenter

FIG.8

Europäisches
Patentamt

**EUROPÄISCHER RECHERCHENBERICHT**

Nummer der Anmeldung

EP 95 11 1210

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-1 794 799 (A. SCHWARZ) 3.März 1931<br>* Seite 2, linke Spalte, Zeile 20 *<br>* Seite 2, rechte Spalte, Zeile 78 - Seite 3, linke Spalte, Zeile 2 *<br>* Seite 3, rechte Spalte, Zeile 66 - Zeile 90; Abbildung 1 *<br>--- | 1-7,9,10 | F02B75/02<br>F02B41/04<br>F02B75/04<br>F02D15/02 |
| X | DE-A-36 13 270 (NOWACK HELMUT) 28.August 1986<br>* das ganze Dokument *<br>--- | 1,7 | |
| A | US-A-4 736 715 (LARSEN GREGORY J) 12.April 1988<br>* Spalte 10, Zeile 37 - Zeile 49 *<br>* Spalte 11, Zeile 3 - Zeile 29; Abbildung 13 *<br>--- | 1,7,<br>11-15 | |
| A | GB-A-214 697 (G.D. WESTROPP) 22.Mai 1924<br>* Seite 1, Zeile 16 - Zeile 39; Anspruch 5 *<br>--- | 1 | |
| A | US-A-3 964 263 (TIBBS ROBERT C) 22.Juni 1976<br>* Zusammenfassung; Abbildung 1 *<br>--- | 1 | RECHERCHIERTE SACHGEBIETE (Int.Cl.6)<br><br>F02B<br>F02D |
| A | EP-A-0 126 812 (PAL LEONHARD JOHANN GERHARD) 5.Dezember 1984<br>* Zusammenfassung; Abbildung 1 *<br>--- | 1 | |
| A | US-A-4 111 164 (WUERFEL ROBERT P) 5.September 1978<br>* Zusammenfassung; Abbildung 1 *<br>--- | 11 | |
| A | DE-U-87 11 149 (G. MEDERER) 9.Juni 1988<br>* Abbildung 1 *<br>--- | 12 | |
| A | US-A-5 215 051 (SMITH) 1.Juni 1993<br>* Zusammenfassung; Abbildung 1 *<br>--- | 13 | |

-/--

Der vorliegende Recherchenbericht wurde für alle Patentansprüche erstellt

| Recherchenort | Abschlußdatum der Recherche | Prüfer |
|---|---|---|
| DEN HAAG | 4.Dezember 1995 | Alconchel y Ungria,J |

EPO FORM 1503 03.82 (P04C03)

EP 0 756 076 A1

---

Europäisches
Patentamt

**EUROPÄISCHER RECHERCHENBERICHT**

Nummer der Anmeldung

EP 95 11 1210

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US-A-3 964 452 (NAKAMURA NORIHIKO ET AL) 22.Juni 1976 <br> * Zusammenfassung; Abbildung 1 * <br> ----- | 14 | |
| | | | **RECHERCHIERTE SACHGEBIETE (Int.Cl.6)** |

Der vorliegende Recherchenbericht wurde für alle Patentansprüche erstellt

| Recherchenort | Abschlußdatum der Recherche | Prüfer |
|---|---|---|
| DEN HAAG | 4.Dezember 1995 | Alconchel y Ungria,J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

...........................................................................................
& : Mitglied der gleichen Patentfamilie, übereinstimmendes Dokument